# EUROPÄISCHE PATENTSCHRIFT

(11) **EP 0 400 441 B1**
(45) Veröffentlichungstag und Bekanntmachung des Hinweises auf die Patenterteilung: **27.07.1994**
(21) Anmeldenummer: 90109600.8
(22) Anmeldetag: 21.05.1990
(51) Int. Cl.: G07F 7/10

(54) **Verfahren zur Prüfung eines mit Chipkarten kommunizierenden Terminals**
Testing method for terminal communicating with IC-cards
Méthode pour tester un terminal communiquant avec des cartes à puce

(30) Priorität: 30.05.1989 DE 3917540
(43) Veröffentlichungstag der Anmeldung: 05.12.1990
(73) Patentinhaber: Siemens Nixdorf Informationssysteme Aktiengesellschaft, 33102 Paderborn (DE)
(72) Erfinder: Kruse, Dietrich, Dipl.-Ing., D-8012 Ottobrunn (DE)
(74) Vertreter: Fuchs, Franz-Josef, Dr.-Ing.

(56) Entgegenhaltungen:
- EP-A- 0 029 894
- EP-A- 0 138 386
- EP-A- 0 281 058
- FR-A- 2 600 188
- GB-A- 2 144 564

## Beschreibung

Die Erfindung betrifft ein Verfahren zur Prüfung eines mit Chipkarten kommunizierenden Terminals, unter Verwendung jeweils eines sowohl in der Chipkarte als auch im Terminal aus einem gemeinsamen Geheimschlüssel und einem gemeinsamen Algorithmus in Abhängigkeit von einer gemeinsamen Zufallszahl abgeleiteten Aktionsschlüssels, wobei vorab eine Authentifikation zumindest des Terminals gegenüber der Chipkarte erfolgt.

In modernen Datenverarbeitungs- und Kommunikationssystemen spielt der Schutz der Daten eine immer wichtigere Rolle. Die Qualität eines Systems in Bezug auf einen ausreichenden Datenschutz hängt dabei entscheidend davon ab, inwieweit es gelingt, daß der Zugriff zum System nur für berechtigte Personen möglich ist und umgekehrt nichtberechtigte Personen mit absoluter Sicherheit ausgesperrt werden. Eine einfache, wenn auch nicht absolut sichere Möglichkeit zur Überprüfung der Zugriffsberechtigung zu einem System sind z.B. sogenannte Paßwörter, die nur dem berechtigten Benutzer bekannt sind und die vom Benutzer beliebig oft geändert werden können. Da bei Paßwörtern die Gefahr besteht, daß sie von Unbefugten ausgespäht oder abgehört werden können, sind zusätzliche Sicherungsmaßnahmen unverzichtbar. Eine dieser Maßnahmen ist z.B. die Ver- und Entschlüsselung der übertragenen Informationen, eine Maßnahme, die bei Datenverarbeitungssystemen u.a. mit Hilfe der Chipkarte realisierbar ist. Mit der fortschreitenden Einbeziehung der Chipkarte in Datenverarbeitungssysteme entsteht andererseits insofern ein zusätzliches Sicherheitsrisiko, als Chipkarten relativ leicht verloren gehen können. Es muß deshalb unbedingt dafür gesorgt werden, daß die Chipkarte bei Verlust in jedem Fall vor einem eventuellen Mißbrauch geschützt ist. Die Chipkarte ist deshalb so konzipiert, daß auf die in einer gesicherten Chipkarte gespeicherten Daten nur dann zugegriffen werden kann, wenn vom Benutzer vorab ein nur in der Chipkarte abgespeicherter Identifikator, beispielsweise eine persönliche Identifikationsnummer, die sogenannte PIN, eingegeben wird.

Eine weitere Sicherheitsbarriere kann mit Hilfe der Authentifikation der Chipkarte zum System aufgebaut werden. Diese Authentifikation verhindert, daß ein beliebiger Teilnehmer durch die Vorgabe, befugt zu sein, an geheime Informationen im System gelangen kann. Eine wesentliche Voraussetzung für die Authentifikation ist ein persönliches, nicht kopierbares Merkmal des Teilnehmers. Dieses nicht kopierbare Merkmal des Teilnehmers wird mit Hilfe eines geheimen Schlüssels für die Ver- und Entschlüsselung erreicht, der den beiden Partnern, d.h. einerseits der Chipkarte und andererseits dem System, und zwar nur diesen beiden Partnern bekannt ist.

Die enge schaltungstechnische Verknüpfung zwischen Chipkarte und Benutzerterminal setzt allerdings auch voraus, daß nicht nur der Benutzer der Chipkarte seine Identität nachweist, sondern daß auch auf der Seite des Terminals sichergestellt ist, daß der Datenfluß im Terminal unmanipuliert abläuft. Dazu gehört z.B., daß die vom Chipkartenbenutzer eingegebene Identifikationsnummer PIN nicht ausgelesen werden kann und daß vom Terminal angezeigte Daten auch mit den an die Chipkarte übergebenen Daten übereinstimmen. Eine Manipulation derart, daß dem Benutzer vermeintlich echte Daten angezeigt und in der Chipkarte falsche Daten verarbeitet werden, muß daher mit Sicherheit ausgeschlossen werden.

Der vorliegenden Erfindung liegt deshalb die Aufgabe zugrunde, ein Verfahren anzugeben, das den Benutzer einer Chipkarte in die Lage versetzt, schnell und einfach erkennen zu können, ob das Terminal, in das er seine Chipkarte gesteckt hat und mittels dessen Tastatur er seine persönliche Identifikationsnummer PIN eingegeben hat, ob also dieses Terminal einwandfrei, d.h. fälschungssicher und unmanipuliert arbeitet. Dabei wird vorausgesetzt, daß dieses Prüfung mit derzeit bekannten Chipkarten durchgeführt werden kann und daß vorab ein durch die Chipkarte ausgelöstes Prüfverfahren durchgeführt wird, bei dem ausgehend von einer in der Chipkarte generierten Zufallszahl identische Sicherheitsprozeduren in der Chipkarte und im Terminal ablaufen und die Gleichheit der Ergebnisse in der Chipkarte überprüft wird (vgl. EP-A-0 281 058 und FR-A-2 600 188).

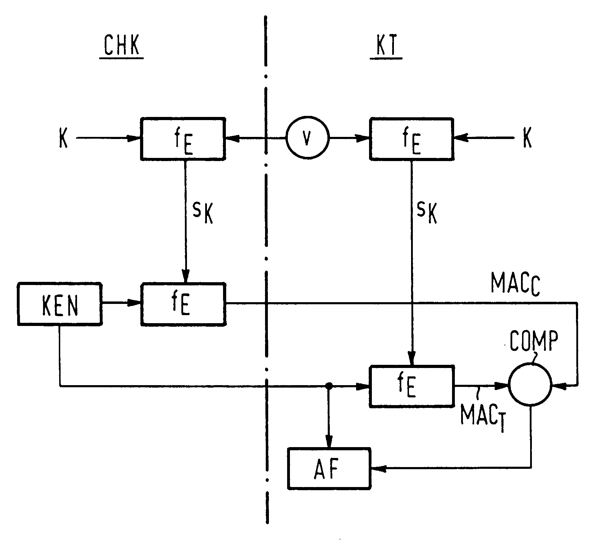

Die Lösung dieser Aufgabe ergibt sich erfindungsgemäß durch die kennzeichnenden Merkmale des Anspruchs. Vorteile und weitere Einzelheiten des erfindungsgemäßen Verfahrens werden im folgenden anhand eines Ausführungsbeispiels unter Bezugnahme auf die Zeichnung näher beschrieben.

Die FIG zeigt im linken Teil eine Chipkarte CHK und im rechten Teil das dazugehörige Kartenterminal KT, wobei jeweils nur die für das Verständnis des erfindungsgemäßen Verfahrens notwendigen Komponenten dargestellt sind. Ausgangspunkt des Verfahrens ist zunächst ein Prüfzyklus, bei dem mit Hilfe der Chipkarte festgestellt wird, ob das Terminal im Sinne der Datensicherheit einwandfrei arbeitet und nicht etwa durch etwaige Manipulationen ein aus der Sicht des Benutzers wahrheitsgetreuer Zustand vorgetäuscht wird. Dieser Test läuft beispielsweise so ab, daß zunächst mit Hilfe einer in der Chipkarte erzeugten Zufallszahl sowohl in der Chipkarte als auch nach Übertragung in das Terminal aus sensitiven Programmdaten für die Datenflußsteuerung zufällige, aber in beiden Komponenten jeweils identische Programmteile ausgewählt werden und daß anschließend jeweils mit Hilfe eines Algorithmus und eines Geheimschlüssels je ein Authentifizierungs-Code gebildet wird. Beide Codes werden schließlich in einer in der Chipkarte vorhandenen Vergleichseinrichtung auf Identität - Indiz für die "Echtheit" des Terminals - geprüft. Damit sich nun auch der Kartenbenutzer von der "Echtheit" der Terminals überzeugen kann, wird sowohl in der Chipkarte CHK als auch im Terminal KT mit Hilfe einer Zufallszahl v ein sogenannter Aktionsschlüssel S_{K} erzeugt. Zu diesem Zweck wird die Zufallszahl v sowohl im Terminal KT als auch nach Übertragung in die Chipkarte CHK jeweils mit Hilfe eines Geheimschlüssels K und eines in beiden Komponenten hinterlegten Algorithmus f_{E} verschlüsselt. Das Ergebnis dieser Verschlüsselung ist der sogenannte Aktionsschlüssel s_{K}. Ferner wird eine irgendwann vorher vom Benutzer in seine Chipkarte CHK eingegebene Kennung KEN authentisch in das Terminal KT übertragen. Die Übertragung dieser Kennung KEN erfolgt einmal direkt und einmal kryptografisch verschlüsselt, wobei diese Verschlüsselung mit Hilfe des Aktionsschlüssels s_{K} und des in der Chipkarte CHK hinterlegten Algorithmus f_{E} erfolgt. In analoger Weise wird auch die direkt in das Terminal KT übertragene Kennung verschlüsselt. Der dabei generierte Authentifikationscode MAC_{T} und der übertragene Authentifikationscode MAC_{C} werden schließlich einem Vergleicher COMP zugeführt, der bei Gleichheit der beiden Signale ein Steuersignal für das Anzeigefeld AF des Terminals KT liefert und dort die Anzeige der in das Terminal übertragenen Kennung KEN auslöst. Falls der Benutzer seine nur ihm selbst bekannte Kennung KEN dort nicht sieht, ist entweder das Terminal KT manipuliert oder die Kennung in der Chipkarte CHK falsch. In jedem Fall muß der Benutzer dann an einem anderen Terminal, vorzugsweise in einer vertrauensvollen Umgebung, eine neue Kennung wählen. Diese Kennung kann wie die persönliche Identifikationsnummer PIN frei gewählt werden. Eingabevoraussetzung für eine neue Kennung ist die vorherige richtige Eingabe der persönlichen Identifikationsnummer PIN. In der oben beschriebenen Weise können auch andere unmanipulierbare Ereignisse aus der Chipkarte am Terminal angezeigt werden.

## Patentansprüche

1. Verfahren zur Prüfung eines mit Chipkarten (CHK) kommunizierenden Terminals (KT), unter Verwendung jeweils eines sowohl in der Chipkarte, als auch im Terminal aus einem gemeinsamen Geheimschlüssel (K) und einem gemeinsamen Algorithmus (f_{E}) in Abhängigkeit von einer gemeinsamen Zufallszahl (v) abgeleiteten Aktionsschlüssels (s_{K}), wobei vorab eine Authentifikation zumindest des Terminals (KT) gegenüber der Chipkarte (CHK) stattfindet, dadurch gekennzeichnet, daß
- sowohl in der Chipkarte (CHK), als auch im Terminal (KT) durch in der Chipkarte (CHK) gespeicherte und in das Terminal (KT) unverschlüsselt übertragene Kennungsdaten (KEN) zusammen mit den jeweiligen Aktionsschlüsseln (sₖ) mit Hilfe des hinterlegten Algorithmus (f_{E}) ein Authentifikationscode (MAC_{C},MAC_{T}) erzeugt wird,
- der in der Chipkarte erzeugte Authentifikationscode (MAC_{C}) in das Terminal (KT) übertragen wird ,
- die beiden Authentifikationscodes (MAC_{C},MAC_{T}) im Terminal (KT) verglichen werden, und
- eine Abzeige der Kennungsdaten (KEN) am Terminal (KT) im Falle gleicher Prüfcodes (MAC_{C},MAC_{T}) erfolgt.

## Claims

1. Method for testing a terminal (KT) communicating with chip cards (CHK), utilizing in each case an action cipher (s_{K}) derived both in the chip card and in the terminal from a common secret cipher (k) and a common algorithm (f_{E}) depending on a common random number (V), in which first of all at least the terminal (KT) is authenticated with respect to the chip card (CHK), characterized in that
- an authentication code (MAC_{C}, MAC_{T}) is generated both in the chip card (CHK) and in the terminal (KT) by identification data (KEN), which is stored in the chip card (CHK) and transmitted into the terminal (KT) without encryption, together with the respective action ciphers (sₖ) with the aid of the stored algorithm (f_{E}),
- the authentication code (MAC_{C}) generated in the chip card is transmitted into the terminal (KT),
- the two authentication codes (MAC_{C}, MAC_{T}) are compared in the terminal (KT), and
- the identification data (KEN) are displayed at the terminal (KT) if the two test codes (MAC_{C}, MAC_{T}) are identical.

## Revendications

1. Procédé de vérification d'un terminal (KT) communiquant avec des cartes (CHK) à puce, en utilisant dans chaque cas une clé (s_{K}) d'opération, dérivée, à la fois dans la carte à puce et aussi dans le terminal, d'un code (K) secret commun et d'un algorithme (f_{E}) commun en fonction d'un nombre aléatoire commun (v), une authentification, au moins du terminal (KT) par rapport à la carte (CHK) à puce, étant opérée, caractérisé en ce qu'
- un code (MAC_{C}, MAC_{T}) d'authentification est produit à la fois dans la carte (CHK) à puce et dans le terminal (KT) par des données (KEN) d'identification mémorisées dans la carte (CHK) à puce et transmises de façon non codée dans le terminal (KT), avec les clés (s_{K}) d'opération considérées, à l'aide de l'algorithme (f_{E}) mémorisé ;
- le code (MAC_{C}) d'authentification produit dans la carte à puce est transmis au terminal (KT) ;
- les deux codes (MAC_{C}, MAC_{T}) d'authentification sont comparés dans le terminal (KT) ;
- et un affichage des données (KEN) d'identification s'effectue dans le terminal (KT) dans le cas où les codes (MAC_{C}, MAC_{T}) de vérification sont identiques.
